# DEMANDE DE BREVET EUROPEEN

(11) **EP 2 400 279 A1**
(43) Date de publication de la demande: **28.12.2011**
(21) Numéro de dépôt: 10305640.4
(22) Date de dépôt: 15.06.2010
(51) Int. Cl.: G01J 3/52, G02B 21/34, G06T 1/00, H04N 1/60

(54) **Procédé d'étalonnage colorimétrique d'une installation de microscopie optique et dispositif pour sa mise en oeuvre**

(71) Demandeur: HISTALIM, 34000 Montpellier (FR)
(72) Inventeur: Sifre, Laurence, 34400 LUNEL (FR); Coton, Jean-Philippe, 34730 VENDARGUES (FR)
(74) Mandataire: Rhein, Alain

(57) **Abrégé**

L'invention concerne un dispositif (1) d'étalonnage colorimétrique d'une installation de microscopie optique comportant un microscope optique ainsi qu'un système d'acquisition d'au moins une image.

Ce dispositif (1) est caractérisé par le fait qu'il est constitué par une lame étalon (2) comportant :
- une lame porte-objet (3) ;
- un moyen d'étalonnage (4), rapporté par-dessus la lame porte-objet (3), et comportant au moins trois pastilles principales (40, 40', 40"), adjacentes et de couleur différente ;
- une lame recouvrante (5) recouvrant au moins le moyen d'étalonnage (4) en sorte que ce moyen d'étalonnage (4) soit interposé entre la lame porte-objet (3) et la lame recouvrante (5).

L'invention concerne, également, un procédé d'étalonnage colorimétrique d'une installation de microscopie optique comportant un microscope optique ainsi qu'un système d'acquisition d'au moins une image, ce procédé d'étalonnage mettant en oeuvre ledit dispositif (1) d'étalonnage colorimétrique.

## Description

La présente invention concerne un dispositif d'étalonnage colorimétrique d'une installation de microscopie optique.

L'invention concerne, également, un procédé d'étalonnage colorimétrique d'une installation de microscopie optique mettant en oeuvre un tel dispositif d'étalonnage.

Cette invention concerne le domaine de la microscopie optique et présente un intérêt tout particulier lorsqu'il s'agit de procéder à l'étalonnage colorimétrique d'une installation de microscopie optique comportant, d'une part, un microscope optique destiné à recevoir un échantillon à examiner et, d'autre part, un système d'acquisition d'au moins une image de cet échantillon fournie par ce microscope optique.

En fait, l'image acquise par une telle installation de microscopie optique fait, usuellement, l'objet d'une analyse qui, dans un premier temps, était utilisée pour des applications de recherche et qui, plus récemment, a conduit à des applications plus industrielles tout d'abord de détection et enfin d'analyse et de mesure.

Au départ, les systèmes d'acquisition utilisaient principalement des capteurs en niveaux de gris en raison de la mauvaise qualité des capteurs couleur et de leur prix prohibitif.

Entre temps, les capteurs couleur ont été améliorés et leur prix a nettement baissé. Parallèlement, de nombreux opérateurs d'analyse, adaptés à des images toujours plus complexes, sont apparus et ont permis une augmentation de l'analyse des images couleur. Cette augmentation des analyses a permis une diversification des applications qui sont passées de la simple détection au dénombrement et, ensuite, à la quantification ainsi qu'à l'extraction de données chiffrées.

A ce propos, on observera que, dans un cadre analytique, la mesure de données quantitatives implique une surveillance étroite ainsi qu'un étalonnage approprié de l'installation de microscopie optique.

En fait, un tel étalonnage doit non seulement prendre en compte l'étalonnage métrique de l'installation mais également la calibration des conditions d'acquisition (lumière, contraste, balance des couleurs) de l'image car ces conditions d'acquisition influencent fortement la détection des objets à mesurer et, par conséquent, le résultat de cette mesure.

Une première solution consiste à recourir à une micromètre-objet qui permet de procéder à un étalonnage métrique (longueur et angle) mais qui n'autorise aucunement l'étalonnage colorimétrique.

Une autre solution consiste à recourir à des systèmes d'acquisition d'images intégrés garantissant une calibration automatique des conditions d'acquisition. En fait, un premier inconvénient d'un tel système consiste en ce qu'il possède son propre algorithme de calibration de sorte que le rendu des couleurs varie d'un système à l'autre. Selon un autre inconvénient, ces systèmes d'acquisition fonctionnent conformément à des conditions d'acquisition considérées par le fabricant comme étant optimales et sont fortement verrouillés. Il est, par conséquent, particulièrement difficile de paramétrer et de reproduire des conditions d'acquisition particulières qui diffèrent de celles considérées comme optimales par le fabricant.

La présente invention se veut de remédier aux inconvénients des dispositifs de l'état de la technique.

A cet effet, l'invention concerne un dispositif d'étalonnage colorimétrique d'une installation de microscopie optique comportant un microscope optique recevant un objet à étudier ainsi qu'un système d'acquisition d'au moins une image de cet objet en microscopie optique. Ce dispositif est constitué par une lame étalon comportant:
- une lame porte-objet ;
- un moyen d'étalonnage, rapporté par-dessus la lame porte-objet, et comportant au moins trois pastilles principales, adjacentes et de couleur différente ;
- une lame recouvrante recouvrant au moins le moyen d'étalonnage en sorte que ce moyen d'étalonnage soit interposé entre la lame porte-objet et la lame recouvrante.

Cette invention concerne, également, un procédé d'étalonnage colorimétrique d'une installation de microscopie optique comportant un microscope optique destiné à recevoir un objet à étudier ainsi qu'un système d'acquisition d'au moins une image de cet objet en microscopie optique. Ce procédé d'étalonnage consiste en ce que, pour une méthode déterminée d'analyse d'une image de cet objet à étudier :
- on acquière, dans des conditions d'acquisition déterminées, une image du moyen d'étalonnage d'un dispositif d'étalonnage colorimétrique conforme à l'une quelconque des revendications précédentes et que reçoit le microscope optique ;
- on détermine les caractéristiques de cette image acquise, on modifie les conditions d'acquisition de cette image acquise et on ajuste les caractéristiques déterminées de cette image acquise aux caractéristiques d'une image de référence de ce même moyen d'étalonnage et préalablement acquise pour cette même méthode d'analyse d'images ;
- ceci pour reproduire les conditions d'acquisition d'une image de l'objet à étudier, nécessaires à cette méthode déterminée d'analyse d'images.

Ainsi, le dispositif d'étalonnage colorimétrique comporte un moyen d'étalonnage comportant au moins trois pastilles adjacentes et de couleur différente, correspondant, avantageusement, à des couleurs primaires, notamment des couleurs primaires en synthèse soustractive à savoir jaune, magenta et cyan.

Ces couleurs sont uniformes et le dispositif d'étalonnage est conçu pour que ces pastilles (et donc leur couleur) soient inaltérables, ce qui permet, avantageusement, au dispositif d'étalonnage d'être réutilisé pour étalonner et réétalonner une installation de microscopie optique.

De plus, le dispositif d'étalonnage est conçu en sorte qu'au moins une partie du moyen d'étalonnage (plus particulièrement au moins les trois pastilles principales) soit observable dans un seul champ d'acquisition ce qui permet, avantageusement, d'utiliser ce dispositif d'étalonnage dans n'importe quelle installation de microscopie optique.

Le procédé d'étalonnage consiste à utiliser ce dispositif d'étalonnage, à acquérir une image de référence du moyen d'étalonnage de ce dispositif d'étalonnage dans des conditions d'acquisition nécessaires pour la mise en oeuvre d'une méthode déterminée d'analyse d'images et, lors de l'étalonnage, à acquérir une image de ce même moyen d'étalonnage et, en modifiant les conditions d'acquisition de cette image pour ajuster les caractéristiques de cette image acquise à celles de l'image de référence, à reproduire, facilement et avec précision, les conditions d'acquisition nécessaires pour la mise en oeuvre de ladite méthode déterminée d'analyse d'images, ceci en cas de déviance de l'installation de microscopie optique.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée et de dessus d'un dispositif d'étalonnage conforme à la présente invention ;
- la figure 2 est une vue schématisée et en détail du moyen d'étalonnage que comporte le dispositif d'étalonnage illustré figure 1 ;
- la figure 3 est une vue schématisée correspondant à la superposition de deux diagrammes de type radar dont l'un représente les caractéristiques d'une image de référence et dont l'autre représente les caractéristiques d'une image acquise au cours du procédé d'étalonnage, ceci avant modification des conditions d'acquisition de l'image acquise pour ajuster ces caractéristiques ;
- la figure 4 est une vue similaire à celle de la figure 3 et correspondant à la superposition de ces deux mêmes diagrammes radar après modification des conditions d'acquisition pour ajuster les caractéristiques des images de référence et acquise ;
- la figure 5 est une représentation schématisée du logigramme correspondant au procédé d'étalonnage de l'invention.

La présente invention concerne le domaine de la microscopie optique de type à fond clair, en transmission et en lumière visible.

Dans ce domaine, il est connu de recourir à une installation de microscopie optique comportant, d'une part, un microscope optique, dont le fonctionnement peut être manuel ou motorisé, et qui est, alors, de type à fond clair, en transmission et en lumière visible. Ce microscope optique est conçu pour recevoir un objet de petite taille, usuellement disposé sur une lame porte-objet, ceci en vue de l'étude de cet objet.

D'autre part, cette installation de microscopie optique comporte un système d'acquisition d'images, couplé à ce microscope optique, et constitué, selon le cas, par un appareil photo numérique couleur, une caméra numérique couleur, un scanner de lame ou autre. Ce système d'acquisition est conçu pour acquérir une image de l'objet à étudier que reçoit le microscope optique, cette image étant constituée par un fichier numérique.

La présente invention trouvera, alors, un intérêt tout particulier lorsqu'il s'agit d'acquérir une telle image d'un tel objet mais également lorsqu'il s'agit d'analyser une telle image en mettant en oeuvre une méthode d'analyse d'images déterminée.

A ce propos, on observera qu'il existe une pluralité de méthodes d'analyse d'images qui nécessitent, chacune, pour sa mise en oeuvre, des conditions d'acquisition spécifiques de l'image à analyser.

Ces conditions d'acquisition sont relatives, d'une part, au microscope optique et relèvent des paramètres de réglage de ce dernier (mise au point, diaphragme d'ouverture, diaphragme de champ, intensité lumineuse...) et, d'autre part, au système d'acquisition d'images et relèvent, là encore, des paramètres de réglage de ce dernier (balance des couleurs, niveau de rouge, niveau de vert, niveau de bleu, saturation, teinte, luminosité, contraste, gamme, gain, temps d'exposition ...).

Aussi, lorsqu'il s'agit d'analyser l'image d'un objet en mettant en oeuvre une méthode d'analyse déterminée, il convient, préalablement à cette analyse (voire préalablement à l'acquisition de cette image), de reproduire les conditions d'acquisition d'une telle image nécessaires pour cette méthode d'analyse déterminée ce qui, conformément à la présente invention, permet de réaliser un étalonnage colorimétrique de l'installation de microscopie optique.

L'invention concerne, alors, un dispositif 1 d'étalonnage colorimétrique d'une installation de microscopie optique (de type à fond clair, en transmission et en lumière visible) comportant un microscope optique (de type susmentionné) recevant un objet à étudier ainsi qu'un système d'acquisition (appareil photo numérique couleur, caméra numérique couleur ou autre) d'au moins une image de cet objet en microscopie optique.

Selon l'invention, ce dispositif 1 d'étalonnage colorimétrique est constitué par une lame étalon 2 comportant :
- une lame porte-objet 3, plus particulièrement réalisée en verre ;
- un moyen d'étalonnage 4, rapporté par-dessus la lame porte-objet 3, et comportant au moins trois pastilles principales (40, 40', 40"), adjacentes et de couleur différente ;
- une lame recouvrante 5 (plus particulièrement réalisée en verre) recouvrant au moins le moyen d'étalonnage 4 en sorte que ce moyen d'étalonnage 4 soit interposé entre la lame porte-objet 3 et la lame recouvrante 5.

En ce qui concerne ledit moyen d'étalonnage 4, celui-ci est conçu pour être observable en lumière transmise et pour une lumière dont les longueurs d'ondes se situent uniquement dans le domaine du visible (à l'exclusion, notamment de l'infrarouge ou de l'ultraviolet).

De plus, le dispositif 1 d'étalonnage colorimétrique est conçu en sorte qu'au moins une partie de ce moyen d'étalonnage 4 (plus particulièrement au moins les trois pastilles principales) soit observable dans un unique champ d'acquisition ce qui permet, avantageusement, d'utiliser ce dispositif 1 d'étalonnage colorimétrique sur n'importe quelle installation de microscopie optique, qu'elle soit de type motorisé ou non.

Tel que mentionné ci-dessus, ce moyen d'étalonnage 4 comporte au moins trois pastilles principales (40, 40', 40"), adjacentes et de couleur différente.

A ce propos, on observera que les couleurs des pastilles principales (40, 40', 40") de ce moyen d'étalonnage 4 sont des couleurs primaires.

Selon un premier mode de réalisation, ces couleurs primaires correspondent à celles de la synthèse additive, à savoir le rouge, le vert et le bleu.

Cependant et selon un mode de réalisation préféré de l'invention, ces couleurs primaires correspondent à celles de la synthèse soustractive à savoir jaune, magenta et cyan.

Ainsi, le moyen d'étalonnage 4 comporte au moins trois pastilles principales (40, 40', 40") de couleur dont au moins une pastille de couleur jaune, au moins une pastille de couleur magenta et au moins une pastille de couleur cyan.

Selon une caractéristique additionnelle, ce moyen d'étalonnage 4 comporte, en plus des pastilles principales (40, 40', 40") adjacentes et de couleur différente susmentionnées, au moins trois pastilles additionnelles.

Selon un premier mode de réalisation, ces pastilles additionnelles peuvent être de couleurs différentes de celles des pastilles principales (40, 40', 40"). Les couleurs de ces pastilles additionnelles peuvent, là encore, être des couleurs primaires, soit en synthèse additive alors que les pastilles principales (40, 40', 40") sont de couleurs primaires en synthèse soustractive, soit en synthèse soustractive alors que les pastilles principales (40, 40', 40") sont de couleurs primaires en synthèse additive.

Cependant et selon un mode de réalisation préféré de l'invention, ces pastilles additionnelles sont de même couleur que les pastilles principales (40, 40', 40") mais de contraste différent (plus foncé ou plus clair).

Un tel mode de réalisation permet, avantageusement, d'étalonner l'installation de microscopie optique dans des conditions d'exposition extrêmes (sous-exposition ou surexposition) et/ou malgré la saturation de certaines couleurs.

En particulier, ce mode de réalisation permet d'étalonner l'installation malgré la saturation de certaines couleurs primaires en synthèse additive (rouge, vert, bleu) correspondant à une couleur primaire en synthèse soustractive (jaune, magenta, cyan) d'une pastille principale (40, 40', 40"), ou inversement.

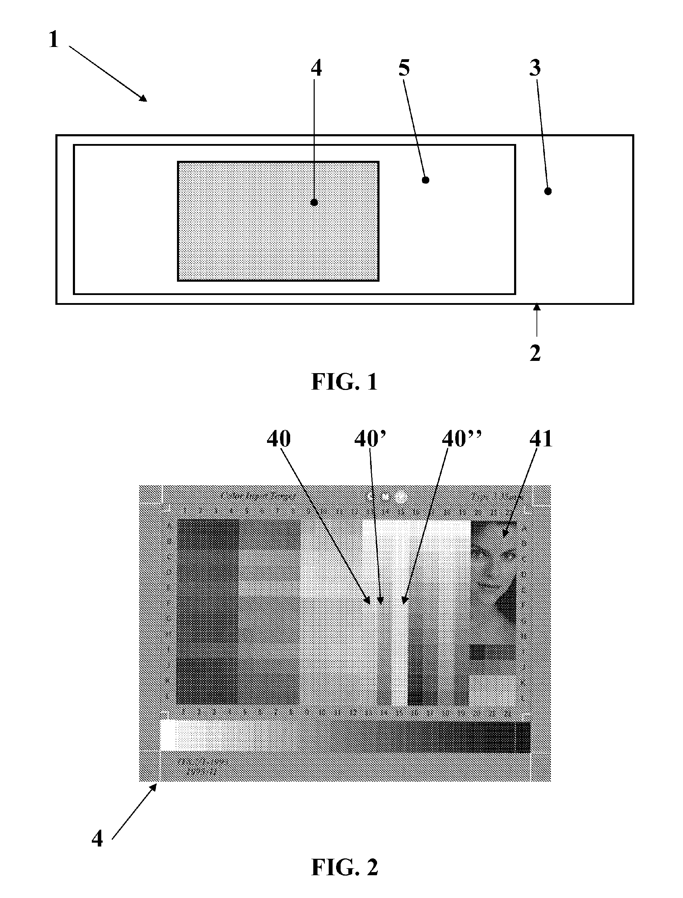

Une autre caractéristique du dispositif 1 d'étalonnage colorimétrique selon l'invention consiste en ce que le moyen d'étalonnage 4 est constitué par une mire colorimétrique comme illustré figure 2. Une telle mire colorimétrique comporte une pluralité de lignes (notamment au nombre de 12) et une pluralité de colonnes (notamment au nombre de 20). L'intersection entre une telle ligne et une telle colonne définit une pastille de couleur telle que décrite ci-dessus, plus particulièrement une pastille principale (40, 40', 40"), voire encore une pastille additionnelle.

Un mode préféré de réalisation consiste en ce qu'une telle mire peut être réalisée grâce à une mire colorimétrique 35mm conforme à la norme ISO 12641 : 1997.

Finalement, une telle mire peut être similaire à une mire reproduite sur une diapositive (mire de type IT8 pour créer des profils ICC) et/ou destinée à un fabricant de papier photo (mire de type Kodak™, Fuji™, HTC™ ou autre).

Une caractéristique additionnelle consiste en ce que le moyen d'étalonnage 4 peut, encore, comporter au moins une image figurative 41. La présence d'une telle image figurative 41 permet, de manière avantageuse, d'aider à la mise au point et/ou de procéder, au moins dans un premier temps d'un procédé d'étalonnage, à un réglage grossier de l'installation de microscopie optique.

Tel que mentionné ci-dessus, la lame étalon 2 comporte une lame recouvrante 5 qui, selon un mode de réalisation préféré de l'invention, recouvre intégralement le moyen d'étalonnage 4 et est scellée sur la lame porte-objet 3, ceci en vue de protéger le moyen d'étalonnage 4 de la déformation et des poussières.

Une telle lame recouvrante 5 peut être constituée par une lamelle de microscopie optique voire (et de préférence) par une autre lame porte-objet.

L'invention concerne, également, un procédé d'étalonnage colorimétrique d'une installation de microscopie optique comportant, tel que mentionné ci-dessus, d'une part, un microscope optique tel que décrit ci-dessus (à fond clair, en transmission et en lumière visible) et destiné à recevoir un objet à étudier et, d'autre part, un système (tel que décrit ci-dessus) pour l'acquisition d'au moins une image de cet objet en microscopie optique.

Ce procédé d'étalonnage a, en fait, pour finalité de placer l'installation de microscope optique dans des conditions d'acquisition spécifiques d'une image de l'objet à étudier, ces conditions d'acquisition spécifiques correspondant à celles nécessaires pour la mise en oeuvre d'une méthode déterminée d'analyse d'une telle image de cet objet, ceci après acquisition de celle-ci.

Selon une caractéristique particulière de ce procédé d'étalonnage colorimétrique, celui-ci nécessite, pour sa mise en oeuvre, un dispositif 1 d'étalonnage colorimétrique présentant les caractéristiques décrites ci-dessus.

Aussi et selon l'invention, ce procédé d'étalonnage colorimétrique consiste en ce que, pour une méthode déterminée d'analyse d'une image d'un objet à étudier en microscopie optique:
- on acquière, dans des conditions d'acquisition déterminées, une image du moyen d'étalonnage 4 d'un dispositif 1 d'étalonnage colorimétrique présentant les caractéristiques mentionnées ci-dessus et que reçoit le microscope optique ;
- on détermine les caractéristiques de cette image acquise (et correspondant à ce moyen d'étalonnage 4) ;
- on modifie les conditions d'acquisition de cette image acquise (ceci pour l'obtention d'une nouvelle image acquise) ;
- on ajuste (ceci en modifiant les conditions d'acquisition de l'image acquise) les caractéristiques déterminées de cette image acquise aux caractéristiques d'une image de référence de ce même moyen d'étalonnage 4 et ayant été préalablement acquise (plus particulièrement au cours d'un procédé d'étalonnage de l'installation pour cette méthode) pour cette même méthode d'analyse d'images ;
- ceci pour reproduire les conditions d'acquisition d'une image de l'objet à étudier, nécessaires à cette méthode déterminée d'analyse d'images.

Selon une caractéristique additionnelle de l'invention, les caractéristiques d'une image (à savoir les caractéristiques déterminées d'une image acquise ou les caractéristiques d'une image de référence) correspondent, en fait, aux niveaux des couleurs d'une telle image (acquise ou de référence).

Ceci étant, lorsqu'on détermine les caractéristiques d'une image acquise du moyen d'étalonnage 4, on détermine, en fait, les niveaux des couleurs de cette image acquise du moyen d'étalonnage 4.

Aussi et lorsqu'on ajuste les caractéristiques déterminées d'une image acquise du moyen d'étalonnage 4 aux caractéristiques d'une image de référence de ce même moyen d'étalonnage 4, on ajuste, en fait, les niveaux des couleurs de l'image acquise aux niveaux des couleurs de l'image de référence, ceci en modifiant les conditions d'acquisition.

A ce propos, il convient d'observer que, selon un premier mode de réalisation de l'invention, les niveaux des couleurs d'une image (acquise ou de référence) correspondent aux niveaux des couleurs primaires en synthèse soustractive (à savoir jaune, magenta, cyan) d'au moins trois pastilles principales (40, 40', 40"), adjacentes, et de couleurs primaires en synthèse additive (à savoir rouge, vert, bleu), que comporte le moyen d'étalonnage 4 du dispositif d'étalonnage 1.

Cependant et selon un mode de réalisation préféré de l'invention, les niveaux des couleurs d'une image (acquise ou de référence) correspondent aux niveaux des couleurs primaires en synthèse additive (à savoir rouge, vert, bleu) d'au moins trois pastilles principales (40, 40', 40"), adjacentes et de couleurs primaires en synthèse soustractive (à savoir jaune, magenta, cyan), que comporte le moyen d'étalonnage 4 du dispositif d'étalonnage 1.

A ce propos, on observera que le niveau d'une telle couleur est exprimé par un chiffre compris entre 0 et 255 sachant que la valeur de 255 correspond à niveau de saturation de cette couleur.

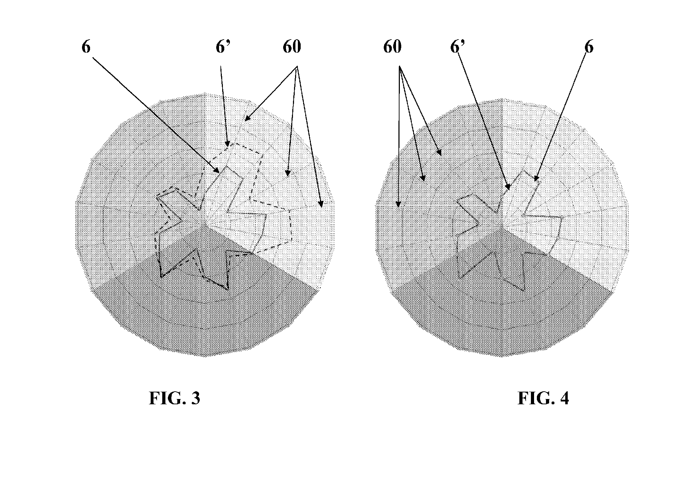

Selon une autre caractéristique de l'invention, à partir de l'image de référence, respectivement de l'image acquise, on calcule un diagramme de type radar fixe 6, respectivement un diagramme de type radar variable 6', présentant une pluralité d'axes 60 sur lesquels sont rapportés les niveaux (compris entre 0 et 255) des couleurs de cette image de référence, respectivement de l'image acquise (figures 3 et 4).

Le procédé consiste, alors, en ce qu'on superpose les diagrammes radar fixe 6 et variable 6' (figure 3) et en ce qu'on visualise la superposition de ces diagrammes radars (6 ; 6') pour permettre l'ajustement des niveaux des couleurs de l'image acquise aux niveaux des couleurs de l'image de référence (figure 4), ceci en modifiant les conditions d'acquisition de l'image acquise.

Une caractéristique additionnelle consiste en ce qu'on définit un indicateur de bruit (focus) et que, lorsqu'on modifie les conditions d'acquisition et qu'on ajuste les caractéristiques (plus particulièrement les niveaux de couleurs) de l'image acquise à celles de l'image de référence, on maximise cet indicateur de bruit (focus) et/ou on approche une valeur de référence de cet indicateur de bruit (focus).

En fait, cet indicateur de bruit (focus) correspond, plus particulièrement, au nombre de pixels issus du seuillage du gradient de l'image acquise.

Selon une autre caractéristique de l'invention, on définit, également, un indicateur de superposition (delta) et, lorsqu'on modifie les conditions d'acquisition et qu'on ajuste les caractéristiques (plus particulièrement les niveaux de couleurs) de l'image acquise à celles de l'image de référence, on minimise cet indicateur de superposition (delta).

En fait, cet indicateur de superposition (delta) correspond, plus particulièrement, à la différence de surface entre le diagramme radar 6 des niveaux de couleurs de l'image de référence et le diagramme radar 6' des niveaux de couleurs de l'image acquise.

Tel que mentionné ci-dessus, le procédé d'étalonnage consiste en ce qu'on modifie les conditions d'acquisition de l'image à acquérir du moyen d'étalonnage 4 du dispositif d'étalonnage 1.

A ce propos, on observera que, lorsqu'on modifie les conditions d'acquisition d'une telle image, on modifie les paramètres de réglage du microscope optique. De manière non restrictive, de tels paramètres de réglage peuvent être constitués par les paramètres de mise au point de l'image et/ou par les conditions d'éclairage telles que le diaphragme d'ouverture, le diaphragme de champ, l'intensité lumineuse...

De manière alternative ou additionnelle aux modifications des paramètres de réglage du microscope optique, lorsqu'on modifie les conditions d'acquisition d'une telle image, on modifie les paramètres de réglage du système d'acquisition d'image. De manière non restrictive, de tels paramètres peuvent être constitués par le niveau de rouge, le niveau de vert, le niveau de bleu, la saturation, la teinte, la luminosité, le contraste, la gamme, le gain, le temps d'exposition...

Tel que mentionné ci-dessus, le procédé d'étalonnage consiste, également, en ce qu'on ajuste les caractéristiques déterminées (plus particulièrement les niveaux des couleurs) d'une image acquise du moyen d'étalonnage 4 aux caractéristiques (plus particulièrement aux niveaux des couleurs) d'une image de référence de ce même moyen d'étalonnage 4.

A ce propos, on observera que, lorsqu'on ajuste ces caractéristiques, le procédé d'étalonnage conforme à l'invention consiste, au moins en ce que :
- on modifie les conditions d'acquisition de l'image en modifiant les paramètres de réglage (tels que ceux susmentionnés) du système d'acquisition d'images et on confère à ce système d'acquisition d'images des paramètres de réglage permettant de minimiser l'indicateur de superposition (delta) ;
- on modifie, ensuite, les conditions d'acquisition de l'image en modifiant les paramètres de réglage (plus particulièrement les conditions d'éclairage) du microscope optique et on confère à ce microscope optique des paramètres de réglage correspondant aux conditions d'éclairage permettant de maximiser l'indicateur de bruit (focus) et/ou d'approcher une valeur de référence de cet indicateur de bruit (focus).

Il convient d'observer que, lorsque l'indicateur de superposition (delta) est trop élevé par rapport à une valeur prédéterminée (par exemple fixée à 0) et/ou lorsque l'indicateur de bruit est trop éloigné d'une valeur de référence prédéterminée (par exemple fixée à 100), le procédé d'étalonnage consiste, encore et par rapport aux modifications susmentionnées des conditions d'acquisition, en ce que :
- préalablement à la modification des paramètres de réglage du système d'acquisition, on modifie les conditions d'acquisition de l'image en modifiant les conditions d'éclairage du microscope optique et on détermine une pluralité de couples (diaphragme d'ouverture/intensité lumineuse) permettant de minimiser l'indicateur de superposition (delta) ;
- lorsque, après avoir modifié les paramètres de réglage du système d'acquisition (comme susmentionné), on modifie les conditions d'acquisition de l'image en modifiant les conditions d'éclairage du microscope, on sélectionne, en fait, le couple (diaphragme d'ouverture/intensité lumineuse) permettant de maximiser l'indicateur de bruit (focus) et/ou d'approcher une valeur de référence de cet indicateur de bruit (focus).

Une caractéristique additionnelle de ce procédé consiste, le cas échéant, en ce que, avant d'ajuster les caractéristiques déterminées d'une image acquise aux caractéristiques d'une image de référence, on modifie les conditions d'acquisition de cette image en procédant à une mise au point de cette image, plus particulièrement en mettant à profit la présence d'une image figurative 41 que comporte le moyen d'étalonnage 4 du dispositif 1 d'étalonnage colorimétrique.

Finalement, pour l'accomplissement des étapes décrites ci-dessus de ce procédé, il convient, au préalable :
- de placer le dispositif 1 d'étalonnage colorimétrique dans le microscope optique et de cadrer le moyen d'étalonnage 4 que comporte ce dispositif 1 d'étalonnage colorimétrique ;
- de charger l'image de référence de ce moyen d'étalonnage 4 acquise préalablement dans des conditions d'acquisition nécessaires à la mise en oeuvre d'une méthode d'analyse d'image déterminée.

A ce propos, on observera qu'un tel chargement se fait à partir d'une mémoire, que comporte l'installation de microscopie optique, et qui contient une pluralité de fichiers informatiques (plus particulièrement dans un format image non compressé) correspondant, chacun, à une image de référence, une telle image de référence correspondant à une méthode déterminée d'analyse d'images.

Selon un mode particulier de réalisation de l'invention, cette mémoire comporte autant d'images de référence que de méthodes déterminées d'analyse d'images.

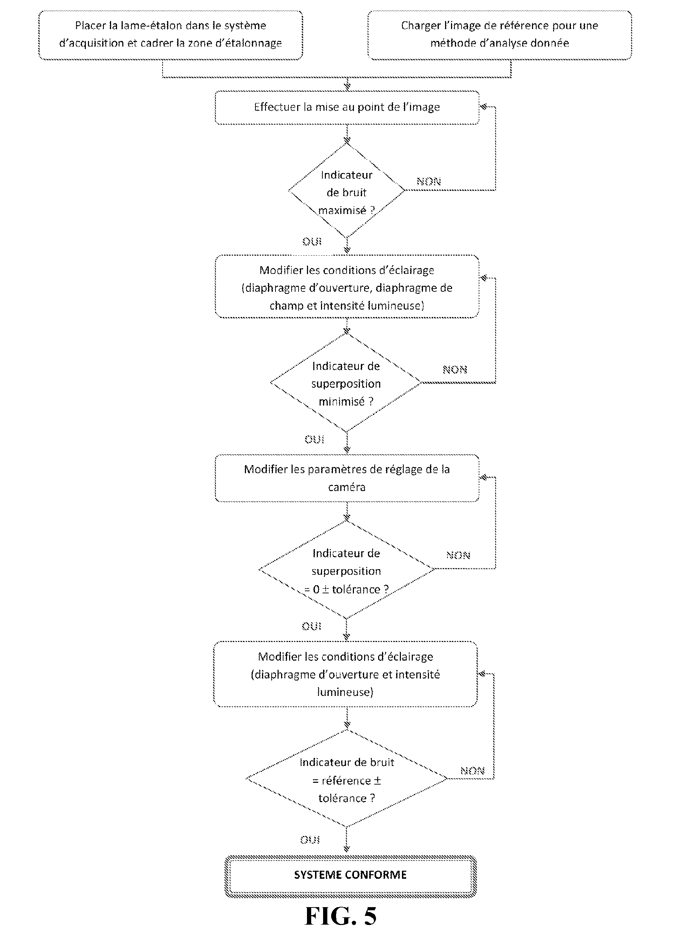

Finalement et en ce qui concerne ladite installation de microscopie optique, celle-ci comporte un moyen (plus particulièrement de type informatique) pour la gestion du déroulement du procédé d'étalonnage colorimétrique faisant l'objet de la présente invention (et dont le logigramme est illustré figure 5).

Un tel moyen de gestion comporte, alors, au moins un moyen de traitement constitué par un logiciel de pilotage du procédé d'étalonnage ainsi que la mémoire susmentionnée.

Ce moyen de gestion peut, avantageusement, être constitué par un ordinateur.

## Revendications

1. Dispositif (1) d'étalonnage colorimétrique d'une installation de microscopie optique comportant un microscope optique recevant un objet à étudier ainsi qu'un système d'acquisition d'au moins une image de cet objet en microscopie optique, **caractérisé par le fait que** le dispositif est constitué par une lame étalon (2) comportant :
- une lame porte-objet (3) ;
- un moyen d'étalonnage (4), rapporté par-dessus la lame porte-objet (3), et comportant au moins trois pastilles principales (40, 40', 40"), adjacentes et de couleur différente ;
- une lame recouvrante (5) recouvrant au moins le moyen d'étalonnage (4) en sorte que ce moyen d'étalonnage (4) soit interposé entre la lame porte-objet (3) et la lame recouvrante (5).

2. Dispositif (1) d'étalonnage colorimétrique selon la revendication 1, **caractérisé par le fait que** les couleurs des pastilles principales (40, 40', 40") du moyen d'étalonnage (4) sont des couleurs primaires, plus particulièrement des couleurs primaires en synthèse soustractive à savoir jaune, magenta et cyan.

3. Dispositif (1) d'étalonnage colorimétrique selon l'une quelconque des revendications 1 ou 2, **caractérisé par le fait que** le moyen d'étalonnage (4) comporte, en plus des pastilles principales (40, 40', 40"), au moins trois pastilles additionnelles, soit de couleurs différentes de celles des pastilles principales (40, 40', 40"), soit de même couleur que les pastilles principales (40, 40', 40") mais de contraste différent.

4. Dispositif (1) d'étalonnage colorimétrique selon l'une quelconque des revendications précédentes, **caractérisé par le fait que** le moyen d'étalonnage (4) est constitué par une mire colorimétrique comportant une pluralité de lignes et une pluralité de colonnes et que l'intersection entre une ligne et une colonne définit une pastille de couleur.

5. Dispositif (1) d'étalonnage colorimétrique selon l'une quelconque des revendications précédentes, **caractérisé par le fait que** le moyen d'étalonnage (4) comporte, encore, une image figurative (41).

6. Dispositif (1) d'étalonnage colorimétrique selon l'une quelconque des revendications précédentes, **caractérisé par le fait que** la lame recouvrante (5) recouvre intégralement le moyen d'étalonnage (4) et est scellée sur la lame porte-objet (3).

7. Procédé d'étalonnage colorimétrique d'une installation de microscopie optique comportant un microscope optique destiné à recevoir un objet à étudier ainsi qu'un système d'acquisition d'au moins une image de cet objet en microscopie optique, ce procédé d'étalonnage consiste en ce que, pour une méthode déterminée d'analyse d'une image de cet objet à étudier :
- on acquière, dans des conditions d'acquisition déterminées, une image du moyen d'étalonnage (4) d'un dispositif (1) d'étalonnage colorimétrique conforme à l'une quelconque des revendications précédentes et que reçoit le microscope optique ;
- on détermine les caractéristiques de cette image acquise, on modifie les conditions d'acquisition de cette image acquise et on ajuste les caractéristiques déterminées de cette image acquise aux caractéristiques d'une image de référence de ce même moyen d'étalonnage (4) et préalablement acquise pour cette même méthode d'analyse d'images ;
- ceci pour reproduire les conditions d'acquisition d'une image de l'objet à étudier, nécessaires à cette méthode déterminée d'analyse d'images.

8. Procédé d'étalonnage colorimétrique selon la revendication 7, **caractérisé par le fait que**, lorsqu'on détermine les caractéristiques d'une image acquise du moyen d'étalonnage (4) du dispositif d'étalonnage (1), on détermine les niveaux des couleurs de cette image acquise et, lorsqu'on ajuste les caractéristiques déterminées de cette image acquise aux caractéristiques d'une image de référence de ce même moyen d'étalonnage (4), on ajuste les niveaux des couleurs de l'image acquise aux niveaux des couleurs de l'image de référence, ceci en modifiant les conditions d'acquisition.

9. Procédé d'étalonnage colorimétrique selon la revendication 8, **caractérisé par le fait que** les niveaux des couleurs d'une image correspondent aux niveaux des couleurs primaires en synthèse additive, respectivement en synthèse soustractive, d'au moins trois pastilles principales (40, 40', 40") adjacentes et de couleurs primaires en synthèse soustractive, respectivement en synthèse additive, que comporte le moyen d'étalonnage (4) du dispositif d'étalonnage (1).

10. Procédé d'étalonnage colorimétrique selon l'une quelconque des revendications 8 ou 9, **caractérisé par le fait que** :
- à partir de l'image de référence, respectivement de l'image acquise, on calcule un diagramme de type radar fixe (6), respectivement un diagramme de type radar variable (6'), présentant une pluralité d'axes (60) sur lesquels sont rapportés les niveaux des couleurs de cette image de référence, respectivement de cette image acquise ;
- on superpose les diagrammes radar fixe (6) et variable (6') et on visualise la superposition de ces diagrammes radars (6 ; 6') pour permettre l'ajustement des niveaux des couleurs de l'image acquise aux niveaux des couleurs de l'image de référence.

11. Procédé d'étalonnage colorimétrique selon l'une quelconque des revendications 7 à 10, **caractérisé par le fait qu'**on définit un indicateur de bruit et que, lorsqu'on modifie les conditions d'acquisition et qu'on ajuste les caractéristiques de l'image acquise à celles de l'image de référence, on maximise cet indicateur de bruit et/ou on approche une valeur de référence de cet indicateur de bruit.

12. Procédé d'étalonnage colorimétrique selon l'une quelconque des revendications 7 à 11, **caractérisé par le fait qu'**on définit un indicateur de superposition et que, lorsqu'on modifie les conditions d'acquisition et qu'on ajuste les caractéristiques de l'image acquise à celles de l'image de référence, on minimise cet indicateur de superposition.

13. Procédé d'étalonnage colorimétrique selon l'une quelconque des revendications 7 à 12, **caractérisé par le fait que**, lorsqu'on modifie les conditions d'acquisition de l'image, on modifie les paramètres de réglage du microscope optique et/ou les paramètres de réglage du système d'acquisition d'images.

14. Procédé d'étalonnage colorimétrique selon les revendications 11 et 12 **caractérisé par le fait que**, lorsqu'on ajuste les caractéristiques déterminées d'une image acquise aux caractéristiques d'une image de référence :
- on modifie les conditions d'acquisition de l'image en modifiant les paramètres de réglage du système d'acquisition d'images et on confère à ce système d'acquisition d'images des paramètres de réglage permettant de minimiser l'indicateur de superposition ;
- on modifie, ensuite, les conditions d'acquisition de l'image en modifiant les conditions d'éclairage du microscope optique et on confère à ce microscope optique des paramètres de réglage correspondant aux conditions d'éclairage permettant de maximiser l'indicateur de bruit et/ou d'approcher une valeur de référence de cet indicateur de bruit.

15. Procédé d'étalonnage colorimétrique selon la revendication 14, **caractérisé par le fait que** :
- préalablement à la modification des paramètres de réglage du système d'acquisition, on modifie les conditions d'acquisition de l'image en modifiant les conditions d'éclairage du microscope optique et on détermine une pluralité de couples (diaphragme d'ouverture/intensité lumineuse) permettant de minimiser l'indicateur de superposition ;
- lorsque, après avoir modifié les paramètres de réglage du système d'acquisition, on modifie les conditions d'acquisition de l'image en modifiant les conditions d'éclairage du microscope, on sélectionne le couple (diaphragme d'ouverture/intensité lumineuse) permettant de maximiser l'indicateur de bruit et/ou d'approcher une valeur de référence de cet indicateur de bruit.
